(19) **Europäisches Patentamt / European Patent Office / Office européen des brevets**

(11) **EP 1 668 869 B1**

(12) **FASCICULE DE BREVET EUROPEEN**

(45) Date de publication et mention de la délivrance du brevet:
**03.01.2007 Bulletin 2007/01**

(51) Int Cl.:
*H04L 29/06* $^{(2006.01)}$  *H04L 12/56* $^{(2006.01)}$
*H04L 1/18* $^{(2006.01)}$

(21) Numéro de dépôt: **04787374.0**

(22) Date de dépôt: **14.09.2004**

(86) Numéro de dépôt international:
**PCT/FR2004/002328**

(87) Numéro de publication internationale:
**WO 2005/034469 (14.04.2005 Gazette 2005/15)**

(54) **PROCEDE POUR ADAPTER UN SEUIL D'EVITEMENT DE CONGESTION EN FONCTION DE LA CHARGE DU RESEAU ET DISPOSITIF D'EMISSION ASSOCIE**

VERFAHREN ZUM VERWENDEN EINER STAUVERMEIDUNGSSCHWELLE ALS FUNKTION DER LAST IN EINEM NETZWERK UND ASSOZIIERTE ÜBERTRAGUNGSEINRICHTUNG

METHOD FOR ADAPTING A CONGESTION AVOIDANCE THRESHOLD AS A FUNCTION OF THE LOAD ON A NETWORK AND ASSOCIATED TRANSMISSION DEVICE

(84) Etats contractants désignés:
**AT BE BG CH CY CZ DE DK EE ES FI FR GB GR HU IE IT LI LU MC NL PL PT RO SE SI SK TR**

(30) Priorité: **30.09.2003 FR 0350620**

(43) Date de publication de la demande:
**14.06.2006 Bulletin 2006/24**

(73) Titulaire: **FRANCE TELECOM**
**75015 Paris (FR)**

(72) Inventeurs:
• **PENHOAT, Jöel**
**F-75013 Paris (FR)**
• **LAMANI, Amine**
**F-75015 Paris (FR)**

(74) Mandataire: **Stephann, Valérie Annabelle**
**France Telecom**
**R&D / PiV / Pi**
**38-40, rue du Général-Leclerc**
**F-92794 Issy Moulineaux Cedex 9 (FR)**

(56) Documents cités:
• **GERLA M ET AL: "TCP WESTWOOD: CONGESTION WINDOW CONTROL USING BANDWIDTH ESTIMATION" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY: IEEE, US, vol. 3 OF 6, 25 novembre 2001 (2001-11-25), pages 1698-1702, XP001054867 ISBN: 0-7803-7206-9 cité dans la demande**
• **MASCOLO S: "TCP WESTWOOD: congestion control with faster recovery" UCLA CSD TECHNICAL REPORT, XX, XX, juillet 2000 (2000-07), pages 1-13, XP002211763**
• **REN WANG ET AL: "Efficiency/friendliness tradeoffs in TCP westwood" PROCEEDINGS OF 7TH INT. SYMPOSIUM ON COMPUTERS AND COMMUNICATIONS ISCC'02, 1 juillet 2002 (2002-07-01), pages 304-311, XP010595780 IEEE Computer Society**
• **ALLMAN M ET AL: "ON ESTIMATING END-TO-END NETWORK PATH PROPERTIES" COMPUTER COMMUNICATION REVIEW, ASSOCIATION FOR COMPUTING MACHINERY. NEW YORK, US, octobre 1999 (1999-10), pages 263-274, XP000852204 ISSN: 0146-4833**
• **JACOBSON V: "CONGESTION AVOIDANCE AND CONTROL" COMPUTER COMMUNICATION REVIEW, ASSOCIATION FOR COMPUTING MACHINERY. NEW YORK, US, vol. 18, no. 4, août 1988 (1988-08), pages 314-329, XP000809820 ISSN: 0146-4833**

- **ALLMAN M ET AL: "TCP Congestion Control"**
  **NETWORK WORKING GROUP REQUEST FOR**
  **COMMENTS, XX, XX, no. 2581, avril 1999**
  **(1999-04), pages 1-12, XP002190151**

# Description

L'invention concerne un procédé pour, lors d'une transmission de données entre un émetteur et un récepteur à travers un réseau, adapter un seuil d'évitement de congestion en fonction de la charge de ce réseau, et un dispositif d'émission pour la mise en oeuvre du procédé.

D'emblée, on notera que par les termes "bande passante disponible" d'un canal de transmission, on entend désigner la quantité de données pouvant être transmise par unité de temps, c'est-à-dire le débit, à travers le canal de transmission.

Lors d'une transmission de paquets de données à travers un réseau, un protocole de contrôle de flux vérifie généralement le bon acheminement des paquets de données entre l'émetteur et le récepteur. Sur l'Internet, le protocole de contrôle de flux le plus largement utilisé est le protocole TCP (Transfer Control Protocol). Ce protocole s'assure de la bonne réception des paquets de données émis par un mécanisme d'accusé de réception suivant lequel, l'émetteur attribuant un numéro de séquence à chaque octet d'un paquet de données émis. A la réception de ce paquet, le récepteur retourne à l'émetteur un accusé de réception "ACK" accompagné du numéro de séquence du prochain octet attendu. Afin de limiter le nombre d'accusés de réception, il est connu d'utiliser un mécanisme d'acquittement cumulatif consistant à émettre des accusés de réception "ACK" confirmant chacun la bonne réception de plusieurs paquets de données. Dans ce cas, chaque accusé de réception est accompagné du numéro de séquence du prochain octet attendu et signale à l'émetteur que tous les précédents paquets de données ont bien été reçus. Pour chaque paquet de données émis, l'émetteur déclenche une horloge de temporisation de retransmission. Si, à l'expiration du délai de retransmission "RTO" (Retransmission Time Out), l'émetteur n'a pas reçu d'accusé de réception pour un paquet préalablement émis, il le transmet une nouvelle fois. Ce délai de retransmission RTO est calculé, à l'aide d'un algorithme, en fonction d'un délai de boucle "RTT" (Round Trip Time), encore appelé délai aller-retour, correspondant à la durée moyenne entre l'émission d'un paquet aller et la réception d'un accusé de réception retour. Si le récepteur reçoit des paquets non successifs, cela est signalé à l'émetteur par l'arrivée d'accusés de réception dupliqués.

L'émetteur utilise également un mécanisme de fenêtre glissante l'autorisant à émettre plusieurs paquets de données avant de recevoir un accusé de réception. La fenêtre contient un certain nombre de paquets pouvant être transmis sans avoir besoin d'accusé de réception. Elle se déplace au fur et à mesure que les accusés de réception sont reçus. A la réception de chaque accusé de réception, l'émetteur supprime les paquets transmis et acquittés dans sa mémoire tampon d'émission et fait avancer sa fenêtre afin d'émettre les paquets suivants. La taille de cette fenêtre d'émission est dynamique. Pour la déterminer, l'émetteur calcule dynamiquement la taille d'une fenêtre dite de congestion, en fonction de l'avancement de la transmission et de la réception des accusés de réception, et, le récepteur lui ayant préalablement déclaré la taille maximale de sa fenêtre de réception, il sélectionne la valeur minimale des tailles respectives de la fenêtre de congestion et de la fenêtre de réception. En définitive, la taille de la fenêtre d'émission est égale à la taille de la fenêtre de congestion majorée par la taille de la fenêtre de réception. Au départ, la taille de la fenêtre d'émission est fixée à un seul paquet, voire à quelques paquets (généralement quatre au plus), puis elle augmente globalement au fur et à mesure que les accusés de réception sont reçus, d'abord de façon exponentielle, jusqu'à un seuil d'évitement de congestion prédéfini, encore appelé *"ssthresh"* (Slow Start Threshold), puis de façon linéaire. La phase de croissance exponentielle de la fenêtre d'émission, située en dessous du seuil d'évitement de congestion *ssthresh,* est appelée "Slow Start" et la phase de croissance linéaire de la fenêtre d'émission, située au-dessus du seuil d'évitement de congestion *ssthresh,* est appelée "Congestion Avoidance". La taille de la fenêtre d'émission augmente ainsi jusqu'à une limite maximale de congestion dont la valeur dépend de la bande passante disponible du canal de transmission, dépendant elle-même de la capacité théorique du canal et du trafic de données à travers ce canal. Lorsque la fenêtre est trop large (débit trop important par rapport à la bande passante disponible), il y a congestion, ce qui se traduit par la perte de paquets de données. Deux cas sont alors envisageables:

    a) l'émetteur reçoit des accusés de réception ACK sélectifs ou dupliqués, révélant la perte de paquets, ou
    b) le délai de retransmission RTO expire avant réception d'un accusé de réception.

Dans ces deux cas a) (notification d'une perte de données) et b) (expiration du délai de retransmission RTO), le protocole TCP prévoit de réduire le seuil d'évitement de congestion *ssthresh* ainsi que la taille de la fenêtre de congestion. En cas de perte de données notifiée (cas a)), le seuil *ssthresh* est réduit à la moitié de la taille de la fenêtre au moment où la congestion a été détectée, et la taille de la fenêtre est également divisée par deux, sa valeur devenant par conséquent égale à la nouvelle valeur du seuil *ssthresh.* La taille de la fenêtre demeure ensuite momentanément sensiblement stable puis recommence à augmenter de manière linéaire jusqu'à atteindre à nouveau une limite maximale de congestion. En cas d'expiration du délai de retransmission RTO (cas b)), le seuil est également réduit à la moitié de la taille de la fenêtre au moment où la congestion a été détectée et la taille de la fenêtre est réduite à un seul paquet. La taille de la fenêtre recommence ensuite à augmenter, d'abord de façon exponentielle jusqu'au nouveau seuil *"ssthresh"* puis de façon linéaire jusqu'à atteindre à nouveau une limite maximale de congestion.

Dans les deux cas a) (perte de données notifiée) et b) (expiration du délai de retransmission RTO), la détection d'une congestion s'effectue a posteriori, après la perte de paquets de données. La taille de la fenêtre et le seuil d'évitement de congestion sont alors brutalement réduits et il faut un certain laps de temps pour que le débit de données redevienne optimal à travers le canal de transmission, eu égard à la bande passante disponible. Ce temps de reprise freine considérablement la vitesse globale de la transmission et est d'autant plus grand que le délai de boucle est important.

La méthode d'ajustement du seuil d'évitement de congestion, telle que prévue par le protocole TCP standard, consistant à réduire ce seuil à la moitié de la taille de la fenêtre au moment où la congestion a été détectée, est particulièrement conservatrice. Elle permet d'assurer une stabilité du protocole TCP sur la plupart des réseaux mais ne prend pas en compte la capacité effective du canal de transmission. Or, comme on l'a déjà évoqué plus haut, la valeur du seuil d'évitement de congestion a une incidence directe sur l'évolution du débit de données. En effet, pendant la phase "Slow Start", l'émetteur augmente son débit d'émission de façon exponentielle tandis que, pendant la phase "Congestion Avoidance", il augmente son débit de façon linéaire. Lorsque le seuil d'évitement de congestion est ajusté sans tenir compte de la bande passante disponible, cela risque de conduire soit à de nouvelles pertes de paquets soit, à l'inverse, à une sous-utilisation de la bande passante disponible.

Pour pallier cet inconvénient, un protocole appelé "TCP Westwood" (TCPW), décrit notamment dans le document "TCP Westwood: Congestion Window Control Using Bandwidth Estimation" (*M. Gerla, M. Y. Sanadidi, R. Wang, A. Zanella, C. Casetti, S. Mascolo, In Proceedings of IEEE Globecom 2001, Volume: 3, pp 1698-1702, San Antonio, Texas, USA, November 25-29, 2001*), propose de modifier le contrôle de congestion TCP côté émetteur. Selon ce protocole, l'émetteur TCPW estime le débit de données en réception, représentatif de la charge du réseau, et adapte le seuil d'évitement de congestion en fonction de la charge du réseau. Pour estimer le débit de réception, le protocole TCPW filtre la vitesse de réception des accusés de réception. Le filtre utilisé est le suivant :

$$\hat{b}_k = \frac{\frac{2\tau}{t_k - t_{k-1}} - 1}{\frac{2\tau}{t_k - t_{k-1}} + 1} \hat{b}_{k-1} + \frac{b_k + b_{k-1}}{\frac{2\tau}{t_k - t_{k-1}} + 1}$$

- $b_k$ représente un échantillon du débit de données en réception, utilisé pour la transmission considérée et

vaut $b_k = \dfrac{d_k}{t_k - t_{k-1}}$ , où $d_k$ est la quantité de données reçues par le récepteur TCP entre les instants $t_{k-1}$ et $t_k$ auxquels l'émetteur TCPW reçoit les accusés de réception $ACK_{k-1}$ et $ACK_k$ respectivement.

- $\hat{b}_k$ représente la mesure filtrée du débit de réception à l'instant $t = t_k$ et
- $1/\tau$ est la largeur du filtre.

Ce filtre pondère les échantillons les plus anciens selon une décroissance exponentielle. En outre, comme il s'agit d'un filtre passe-bas, tous les éléments de fréquence supérieure à $1/\tau$, en particulier les rafales de paquets de données, sont éliminés par filtrage.

Selon le théorème d'échantillonnage de Nyquist, pour échantillonner un signal avec une bande passante de $1/\tau$, le pas d'échantillonnage doit être inférieur ou égal à $1/2^*\tau$. Or, les accusés de réception ACK envoyés par le récepteur TCP à l'émetteur TCPW peuvent être irréguliers et ne pas satisfaire à cette condition. Pour pallier cet inconvénient, le protocole TCPW prévoit de générer des accusés de réception virtuels auxquels une valeur nulle du débit de réception est attribuée ($b_k = 0$).

Le protocole TCPW utilise une estimation du débit de réception pour modifier le seuil d'évitement de congestion, en cas de réception d'accusés de réception dupliqués ou d'expiration du délai de retransmission, à l'aide de la formule suivante :

$$ssthresh = E_{Débit\ réc.} * RTT_{\min}$$

où

- $E_{Débit\ réc.}$ représente une estimation du débit de réception et a pour valeur $\hat{b}_k$, $\hat{b}_k$ représentant donc la moyenne des échantillons jusqu'à l'instant de la perte
- $RTT_{\min}$ représente le délai de boucle minimum observé depuis le début de la transmission et

Le mécanisme d'adaptation du seuil d'évitement de congestion à la charge du réseau, selon le protocole TCP Westwood, s'avère très complexe à mettre en oeuvre et requiert d'importants calculs.

La présente invention propose donc un procédé pour, lors d'une transmission de données entre un émetteur et un récepteur à travers un réseau, adapter un seuil d'évitement de congestion en fonction de la charge du réseau, dans lequel l'émetteur mesure un délai de boucle minimum $RTT_{min}$, le délai de boucle RTT représentant la durée entre l'envoi d'un paquet de données et la réception d'un accusé de réception correspondant, estime le débit de réception $E_{débit\ réc.}$ et calcule une nouvelle valeur du seuil d'évitement de congestion à l'aide de la

formule $ssthreh = RTT_{min}.E_{débit\ réc.}$, procédé qui soit plus simple à mettre en oeuvre que le mécanisme d'ajustement prévu par le protocole TCP Westwood.

Le problème est résolu par le fait que durant une opération d'estimation du débit de réception de durée T,

- l'émetteur mesure la quantité Q de données préalablement émises par lui et acquittées durant la durée T et calcule une estimation du débit de réception à l'aide de la formule $E_{Débit\ réc.} = \dfrac{Q}{T}$, la durée T de l'opération d'estimation du débit de réception est sensiblement égale à:

  - 4*$RTT_{min}$ si l'émetteur reçoit un accusé de réception entre l'instant $(t_0 + 4*RTT_{min} - d)$ et l'instant $(t_0 + 4*RTT_{min} + d)$,
  - 8*$RTT_{min}$ si l'émetteur reçoit un accusé de réception entre l'instant $(t_0 + 8*RTT_{min} - d)$ et l'instant $(t_0 + 8*RTT_{min} + d)$,

  d représentant un délai de marge dont la valeur dépend du réseau,

- si la durée de l'opération d'estimation dépasse 8*$RTT_{min}$+d, du fait que l'émetteur n'a reçu aucun accusé de réception durant ladite opération d'estimation, celle-ci est interrompue.

Pour évaluer la charge du réseau, l'émetteur estime le débit de réception en mesurant la quantité de données acquittées, après avoir été vidées d'une mémoire tampon d'émission, durant une opération d'estimation, encore appelée campagne d'estimation, de durée T. Le calcul de l'estimation du débit de réception consiste en fait à calculer la vitesse de déplacement du bord gauche de la fenêtre d'émission. A un délai de boucle près, cette vitesse est égale au débit de réception vu par l'émetteur. L'émetteur estime ainsi de façon approximative le débit de réception, lequel est représentatif de la charge du réseau. Une telle estimation du débit de réception est certes moins précise que celle proposée par le protocole TCP Westwood, mais elle présente l'avantage d'être considérablement plus simple à effectuer. En effet, l'émetteur connaît facilement la quantité de données acquittées Q, grâce aux accusés de réception reçus, et le calcul du rapport Q/T ne présente donc aucune difficulté et n'implique pas une charge de calcul importante. Le demandeur a donc eu l'audace de rechercher à calculer un seuil d'évitement de congestion adapté à la charge du réseau de façon approximative afin, en contrepartie, de simplifier considérablement le calcul de ce seuil.

En outre, et avantageusement, la durée T d'une opération d'estimation du débit de réception est égale à $2^p * RTT_{min}$, où p est un entier naturel valant ici 2 ou 3. Les calculs de l'estimation du débit de réception sont ainsi encore grandement facilités.

Si aucun accusé de réception n'est reçu avant ou à l'instant $(t_0 + 8*RTT_{min} + d)$, cela révèle un manque de stabilité probable de la transmission. Dans ce cas, l'opération d'estimation est interrompue afin d'éviter qu'elle ne dure trop longtemps sans garantie de fiabilité.

Avantageusement, si aucune congestion n'est détectée durant l'opération d'estimation, une nouvelle opération d'estimation est lancée à la suite de celle-ci.

Avantageusement encore, si une congestion est détectée lors d'une opération d'estimation, celle-ci est interrompue et une nouvelle opération d'estimation est lancée après un retour à l'état stable de la transmission.

La congestion peut se traduire par la réception d'accusés de réception dupliqués ou par la perte de paquets.

L'invention concerne également un dispositif d'émission pour la mise en oeuvre du procédé précédemment défini, agencé pour, lors d'une transmission de données vers un récepteur à travers un réseau, adapter un seuil d'évitement de congestion en fonction de la charge dudit réseau, dispositif comprenant

- des moyens pour mesurer un délai de boucle minimum $RTT_{min}$, le délai de boucle RTT représentant la durée entre l'envoi d'un paquet de données et la réception d'un accusé de réception correspondant, et
- des moyens d'adaptation du seuil d'évitement de congestion à la charge du réseau, agencés pour estimer le débit de réception $E_{Débit\ réc.}$ et calculer une nouvelle valeur du seuil de congestion à l'aide de la formule $ssthreh = RTT_{min}.E_{Débit\ réc.}$, dispositif caractérisé par le fait que les moyens d'adaptation du seuil d'évitement de congestion à la charge du réseau sont agencés pour, durant une opération d'estimation du débit de réception de durée T,

  - mesurer la quantité Q de données acquittées durant la durée T et pour estimer le débit de réception à l'aide de la formule $E_{Débit\ réc.} = \dfrac{Q}{T}$, la durée T de l'opération d'estimation du débit de réception est sensiblement égale à:

    - 4*$RTT_{min}$ si l'émetteur reçoit un accusé de réception entre l'instant $(t_0 + 4*RTT_{min} - d)$ et l'instant $(t_0 + 4*RTT_{min} + d)$,
    - 8*$RTT_{min}$ si l'émetteur reçoit un accusé de réception entre l'instant $(t_0 + 8*RTT_{min} - d)$ et l'instant $(t_0 + 8*RTT_{min} + d)$,

d représentant un délai de marge dont la valeur dépend du réseau,

- interrompre l'opération d'estimation, si la durée T de celle-ci dépasse $8*RTT_{min}+d$, du fait que l'émetteur n'a reçu aucun accusé de réception durant ladite opération d'estimation,

L'invention sera mieux comprise à l'aide de la description suivante d'un mode de réalisation particulier du procédé pour ajuster un seuil d'évitement de congestion et du dispositif d'émission pour la mise en oeuvre de ce procédé, selon l'invention, en référence au dessin annexé sur lequel:

- la figure 1 représente une vue schématique d'un réseau de communication, d'un fournisseur d'accès au réseau, avec un serveur accélérateur de débit, d'un terminal de communication et d'un canal de transmission entre le serveur et le terminal;
- la figure 2 représente un schéma bloc fonctionnel du serveur accélérateur de débit de la figure 1;
- la figure 3 représente une succession de paquets de données transmis ou à transmettre par le serveur accélérateur de débit de la figure 1 et une fenêtre d'émission de ces paquets;
- la figure 4 représente un exemple d'évolution de la fenêtre d'émission de la figure 3;
- la figure 5A représente un exemple de reprise de débit suite à deux congestions successives (respectivement détectées par expiration du délai de retransmission et notification de la perte de paquets) par un émetteur TCP utilisant le mécanisme TCP standard d'ajustement du seuil d'évitement de congestion et
- la figure 5B représente un exemple de reprise de débit suite à une congestion (détectée par expiration du délai de retransmission) par un émetteur TCP utilisant le mécanisme d'ajustement du seuil d'évitement de congestion de l'invention.

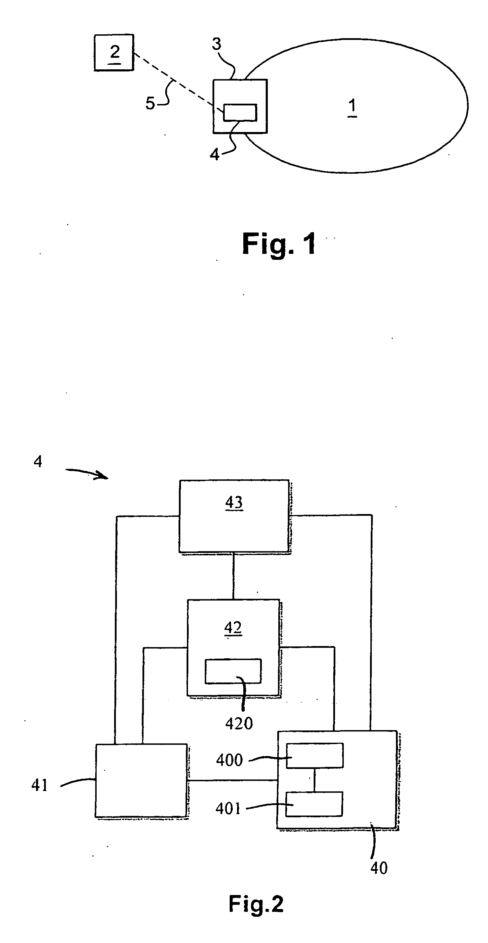

Sur la figure 1, on a représenté un réseau de communication 1, en l'espèce l'Internet, et un terminal de communication client 2 connecté à l'Internet 1 par l'intermédiaire d'un fournisseur d'accès ISP (Internet Service Provider) 3. Le fournisseur d'accès 3 intègre un serveur accélérateur de débit 4, encore appelé serveur "proxy". La référence 5 désigne le canal de transmission entre le terminal de communication 2 et le serveur accélérateur de débit 4. Dans l'exemple particulier de la description, le canal de transmission 5 est une liaison TCP (Transfer Control Protocol) par voie satellite.

Le protocole TCP de contrôle de flux, utilisé sur le canal de transmission 5, permet de contrôler le bon acheminement de paquets de données entre le serveur 4 et le terminal client 2, à l'aide d'un mécanisme d'accusé de réception cumulatif fonctionnant de la manière suivante: L'émetteur TCP attribue un numéro de séquence à chaque octet émis. Après avoir reçu plusieurs paquets de données transmis par l'émetteur TCP, le récepteur TCP renvoie à l'émetteur TCP un accusé de réception "ACK" accompagné du numéro de séquence du prochain octet attendu et confirmant la bonne réception de tous les paquets précédant cet octet. Si, à l'expiration d'un délai de retransmission "RTO" (Retransmission Time Out) prédéterminé, l'émetteur TCP n'a pas reçu d'accusé de réception pour un paquet préalablement émis, il le transmet une nouvelle fois vers le récepteur TCP. Ce délai de retransmission RTO est calculé par l'émetteur TCP, à l'aide d'un algorithme spécifié par le protocole TCP, en fonction d'un délai de boucle "RTT" (Round Trip Time) correspondant à la durée moyenne entre l'émission d'un paquet aller et la réception d'un accusé de réception retour.

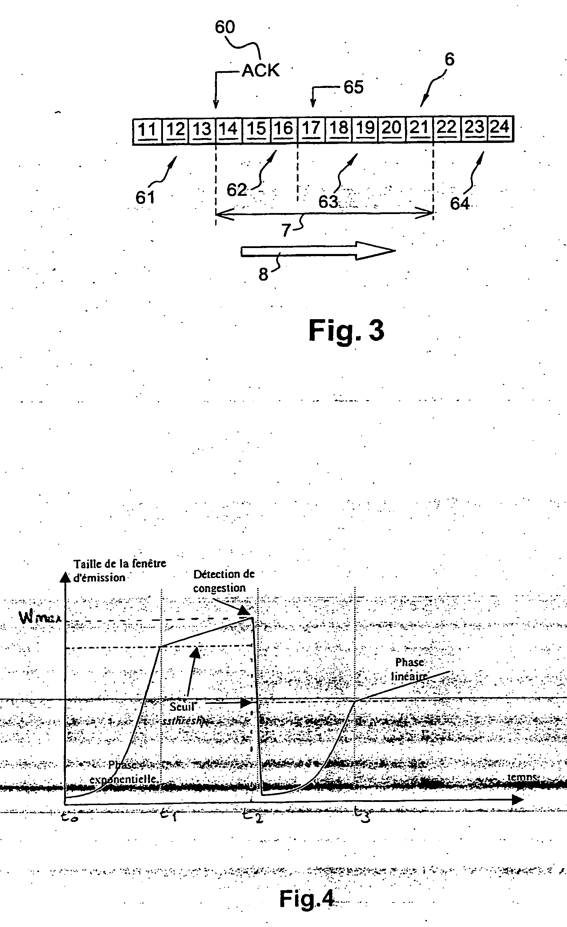

L'émetteur TCP utilise également un mécanisme de "fenêtre d'émission glissante" l'autorisant à émettre plusieurs paquets de données, contenus dans la fenêtre, avant de recevoir un accusé de réception. La fenêtre d'émission contient les paquets autorisés à être émis sans avoir besoin d'accusé de réception (voir figure 3). Cette fenêtre se déplace et augmente au fur et à mesure que l'émetteur TCP reçoit les accusés de réception. Ainsi, à la réception de chaque accusé de réception, l'émetteur TCP fait avancer sa fenêtre d'émission afin d'émettre les paquets suivants et augmente la taille de celle-ci. Au départ, la fenêtre d'émission contient un paquet, voire quelques paquets (généralement quatre au plus), et augmente d'abord de façon exponentielle jusqu'à un seuil prédéterminé appelé *"ssthresh"* (Slow Start Threshold), puis de façon linéaire jusqu'à une limite optimale au-delà de laquelle il y a congestion, ce qui se traduit par la perte de paquets de données. Sur la figure 3, on a représenté une succession 6 de paquets de données numérotés de *11* à *24* et une fenêtre glissante d'émission 7 à un instant donné. Sur cette figure 3, on peut classer les paquets de données de la manière suivante:

- paquets envoyés et acquittés 61: *n˚11 à 13*
- paquets envoyés et non acquittés 62: *n˚14 à 16*
- paquets devant être envoyés 63: *n˚17 à 21*
- paquets non autorisés à être envoyés 64: *n˚22 à 24*

Le dernier acquittement reçu "ACK" 60 a confirmé la réception de tous les paquets de données précédant le paquet *n˚14.* L'émetteur TCP n'est autorisé à envoyer que les paquets contenus dans la fenêtre d'émission (numérotés de 14 à 21) sans recevoir d'accusé de réception. Pour être autorisé à émettre les paquets suivants, non contenus dans la fenêtre 7 telle que représentée sur la figure 3, l'émetteur TCP doit recevoir un nouvel accusé de réception ACK et faire glisser sa fenêtre 7 vers la droite (dans le sens de la flèche 8). Concomitamment, l'émetteur TCP augmente la taille de sa fenêtre d'émission 7.

Sur la figure 4, on a représenté un exemple d'évolution de la taille de la fenêtre d'émission 7 et d'ajustement du seuil *ssthresh* conformément au protocole TCP standard. Au départ, à l'instant t0, la taille de la fenêtre est ici fixée à un paquet de données. Entre les instants t0 et t1, la taille de la fenêtre augmente de façon exponentielle jusqu'au seuil *ssthresh* puis, entre les instants t1 et t2, de façon linéaire, jusqu'à une limite maximale de congestion $W_{max}$. A l'instant t2, l'émetteur détecte une congestion, ici par expiration du délai de retransmission, et réduit alors brutalement la taille de sa fenêtre d'émission à un seul paquet ainsi que le seuil d'évitement de congestion *ssthresh* à la moitié de la taille de la fenêtre au moment où la congestion a été détectée. La taille de la fenêtre recommence ensuite à augmenter d'abord de façon exponentielle jusqu'à l'instant t3, auquel le nouveau seuil d'évitement de congestion est atteint, puis de façon linéaire.

L'émetteur TCP représenté sur la figure 2 est le serveur accélérateur de débit 4. Il comprend, de façon connue, un module 40 d'émission de paquets de données et un module 41 de réception d'accusés de réception.

Le module d'émission 40 est agencé pour émettre des paquets de données en utilisant la méthode de la "fenêtre glissante d'émission" précédemment explicitée (voir figure 3). Il est donc autorisé à envoyer plusieurs paquets de données, contenus dans la fenêtre d'émission, avant de recevoir un accusé de réception. Au fur et à mesure de la réception des accusés de réception, signalés par le module de réception 41, le module d'émission 40, d'une part, fait avancer la fenêtre glissante d'émission et, d'autre part, modifie la taille de cette fenêtre. On rappelle ici que, conformément au protocole TCP, la taille de la fenêtre, fixée au départ à un paquet, voire à quelques paquets (quatre au plus), augmente, dans un premier temps, de façon exponentielle jusqu'au seuil *"ssthresh"* (Slow Start Threshold) d'évitement de congestion, puis, dans un second temps, de façon linéaire jusqu'à une limite maximale de congestion. En cas de congestion, détectée par la perte de paquets notifiée ou par expiration du délai de retransmission, la taille de la fenêtre ainsi que le seuil *"ssthresh"* d'évitement de congestion sont réduits par le module d'émission 40. La taille de la fenêtre est ajustée conformément au protocole TCP. En revanche, le seuil d'évitement de congestion est ajusté suivant la méthode de l'invention, telle que décrite plus loin dans la description du procédé.

Le module d'émission 40 intègre une horloge de temporisation de retransmission 400 et un bloc de calcul 401 agencé pour calculer le délai de retransmission RTO à l'aide d'un algorithme spécifié par le protocole TCP, à partir du délai de boucle RTT. On rappelle ici que le délai de boucle RTT correspond à la durée moyenne entre l'envoi d'un paquet de données aller et la réception d'un accusé de réception retour. En fonctionnement, le bloc de calcul 401 mesure le délai de boucle RTT à des instants d'échantillonnage $t_i$ successifs. L'horloge 400 de temporisation de retransmission, reliée au bloc 401 de calcul du délai de retransmission RTO, est agencée pour commander la retransmission d'un paquet de données si, à l'expiration du délai de retransmission RTO, l'émetteur TCP 4 n'a pas encore reçu d'accusé de réception pour ce paquet.

Le module 41 de réception d'accusés de réception, relié au module d'émission 40, est agencé pour recevoir et traiter les accusés de réception "ACK" et pour transmettre aux autres modules des informations utiles, fournies par les accusés de réception, pour mettre à jour des variables d'état d'émission telles que notamment le délai de retransmission RTO, le délai de boucle RTT, la taille W de la fenêtre glissante d'émission et le seuil *"ssthresh"*.

L'émetteur TCP 4 comprend en outre un module 42 d'adaptation du seuil d'évitement de congestion en fonction de la charge du réseau et un module 43 de test de stabilité.

Le module 42 d'adaptation du seuil est interposé entre le module 41 de réception des accusés de réception et le module d'émission 40. Il est agencé pour exécuter une succession d'opérations d'estimation du débit de données en réception. Lors de chaque opération d'estimation de durée T, le module d'adaptation du seuil 42:

i) mesure la quantité Q de données préalablement émises par l'émetteur 4 et acquittées durant l'opération d'estimation, à l'aide des informations fournies par le module 41 de réception des accusés de réception,

ii) estime le débit de réception à l'aide de la formule

$$E_{Débit\ réc.} = \frac{\cdot Q}{T}$$, où $E_{Débit\ réc.}$ représente une estimation du débit de réception, et

iii) calcule un nouveau seuil d'évitement de congestion *ssthresh* à l'aide de la formule *ssthreh* = $RTT_{min} \cdot E_{Débit\ réc.}$ et mémorise celui-ci dans la mémoire 420,

iv) en cas de congestion, ajuste la valeur du seuil d'évitement de congestion *ssthresh* soit à la dernière valeur de seuil calculée avant congestion ou soit de manière conforme au protocole TCP standard, comme cela sera explicité dans la description du procédé.

Afin de simplifier encore davantage les calculs, la valeur de T est égale à $2^p*RTT_{min}$. Ainsi, on a

$$ssthreh = \frac{Q}{2^p}.$$

Dans l'exemple particulier de la description, la durée T de chaque opération est sensiblement égale à

- $4*RTT_{min}$ $\left(\text{et donc } ssthreh = \dfrac{Q}{4}\right)$ si l'émetteur 4 reçoit un premier accusé de réception entre l'instant $(t_0+4*RTT_{min}-d)$ et l'instant $(t_0+4*RTT_{min}+d)$, ou

- $8*RTT_{min}$ $\left(\text{et donc } ssthreh = \dfrac{Q}{8}\right),$ si l'émetteur 4 reçoit un premier accusé de réception entre l'instant $(t_0+8*RTT_{min}-d)$ et l'instant $(t_0+8*RTT_{min}+d)$,

$t_0$ et d représentant respectivement l'instant de début de l'opération d'estimation considérée et un délai de marge dont la valeur dépend du réseau. A titre d'exemple illustratif, la valeur du délai de marge d peut être égale à 50 ms pour un réseau satellite et à 200 ms pour un réseau GPRS.

Ainsi, si, lors d'une opération d'estimation, l'émetteur reçoit un premier accusé de réception à l'instant $t_1 = t_0 + 4*RTT_{min} \pm d$, l'opération d'estimation dure sensiblement $4*RTT_{min}$ et se termine à cet instant $t_1$. Sinon, l'opération est prolongée jusqu'à l'instant $t_2 = t_0 + 8 * RTT_{min} \pm d$ et dure donc sensiblement $8*RTT_{min}$.

Si aucun accusé de réception n'est reçu avant ou à l'instant $(t_0 + 8*RTT_{min} + d)$, cela révèle un manque de stabilité probable de la transmission. Dans ce cas, l'opération d'estimation est interrompue afin d'éviter qu'elle ne dure trop longtemps sans garantie de fiabilité.

Le module 42 d'adaptation du seuil en fonction de la charge du réseau est agencé pour lancer une succession d'opérations d'estimation à compter du début de la transmission. Si aucune congestion n'est détectée lors d'une opération d'estimation, une nouvelle opération d'estimation est lancée immédiatement après celle-ci. Si la durée d'une opération d'estimation dépasse $8*RTT_{min}$ + d, elle est interrompue et une nouvelle opération d'estimation est lancée à la suite de la précédente. Si une congestion est détectée au cours d'une opération d'estimation, celle-ci est interrompue prématurément et une nouvelle opération d'estimation est lancée après un retour à l'état stable de la transmission. Le module d'adaptation 42 est informé d'une congestion soit par le module de réception d'accusé de réception 41, lorsque celui-ci reçoit des accusés de réception sélectifs ou dupliqués signalant la perte ou le désordre de paquets, soit par l'horloge de temporisation de retransmission 400, en cas d'expiration du délai de retransmission RTO.

Le module 43 de test de stabilité, relié au module d'émission 40, au module de réception 41 et au module d'ajustement 42, est destiné à surveiller l'état de la transmission après une congestion, afin de vérifier si la transmission redevient stable. Le test de stabilité effectué consiste à calculer la valeur courante du délai de boucle et à la comparer à la valeur moyenne du délai de boucle observée durant la période T, la transmission étant stable si ces deux valeurs sont sensiblement identiques. Si la transmission redevient stable dans un délai de reprise ici sensiblement égal au délai de retransmission RTO, le module d'émission 40 ajuste le seuil d'évitement de congestion suivant la méthode de l'invention, qui sera explicitée plus loin. Sinon, il ajuste le seuil d'évitement de congestion conformément au protocole TCP, en le réduisant à la moitié de la taille de la fenêtre d'émission lorsque la congestion a été détectée.

Un mode particulier du procédé de l'invention pour adapter le seuil d'évitement de congestion en fonction de la charge du réseau lors d'une transmission de données entre le serveur 4, émetteur, et le terminal 2, récepteur, à travers le canal 5, va maintenant être explicité.

L'émetteur 4 mesure le délai de boucle RTT à des instants d'échantillonnage successifs, afin de calculer le délai de retransmission RTO, conformément au protocole TCP.

Parallèlement, à partir du début de la transmission et tant qu'aucune congestion n'est détectée, l'émetteur 4 lance une succession d'opérations d'estimation du débit de réception. Durant chaque opération d'estimation, l'émetteur 4 mesure la grandeur Q, égale à la quantité de données préalablement émises par l'émetteur 4 et acquittées durant une durée T, estime le débit de réception à l'aide de la formule suivante

$$E_{Débit\ réc.} = \frac{Q}{T},$$ calcule un nouveau seuil d'évitement de congestion à l'aide de la formule suivante $ssthreh = RTT_{min}. E_{Débit\ réc.}$ et mémorise celui-ci dans la mémoire 420. On rappelle ici que, lorsque la transmission est stable, la durée de chaque opération est sensiblement égale

à $4 * RTT_{min}$ ou à $8 * RTT_{min}$ et $ssthreh = \dfrac{Q}{4}$ ou $\dfrac{Q}{8}.$

Le seuil d'évitement de congestion $ssthresh,$ ainsi calculé à l'issue de chaque opération d'estimation, est mémorisé dans une mémoire 420 du module 42. On soulignera ici que le seuil d'évitement de congestion ainsi calculé permet une reprise du débit adaptée à la bande passante disponible.

Si aucune congestion n'est détectée durant une opération d'estimation, une nouvelle opération d'estimation est lancée immédiatement après celle-ci. Tant que la transmission est stable, les opérations d'estimation du débit de réception se succèdent et le seuil d'évitement de congestion est régulièrement mis à jour dans la mémoire 420.

Si la durée de l'opération d'estimation excède $8*RTT_{min}$ + d, du fait que l'émetteur n'a pas reçu d'accusé de réception entre l'instant $t_0$ de début de l'opération et l'instant $t_0+8*RTT_{min}$ + d, l'opération est interrompue et le seuil d'évitement de congestion n'est pas mis à jour. L'émetteur 4 lance une nouvelle opération d'estimation après l'interruption. On pourrait prévoir que, dans ce cas, l'émetteur vérifie que la transmission est bien stable, avant de lancer une nouvelle opération d'estimation.

Si l'émetteur 4 détecte une congestion, par la réception d'un accusé de réception sélectif ou dupliqué (signalant une perte ou un désordre de paquets) ou en cas d'expiration du délai de retransmission RTO, durant une opération d'estimation, celle-ci est interrompue prématurément. Du fait de cette interruption, le seuil d'évitement de congestion n'est pas mis à jour dans la mémoire 420. En raison de la congestion, l'émetteur 4 réduit la taille de sa fenêtre d'émission, conformément au protocole TCP. Par ailleurs, il surveille l'état de la transmission, en effectuant le test de stabilité préalablement explicité, afin de détecter le retour à un état stable de la transmission. Si la transmission redevient stable avant l'expiration d'un délai de reprise, ici sensiblement égal au délai de retransmission RTO, à compter de la congestion, l'émetteur 4 ajuste le seuil d'évitement de congestion *"ssthresh"* à la dernière valeur de seuil calculée et mémorisée dans la mémoire 420, c'est-à-dire celle calculée lors de l'opération d'estimation ayant précédé l'opération d'estimation interrompue du fait de la congestion. Sinon, c'est-à-dire si la transmission n'est pas redevenue stable à l'expiration du délai de reprise, l'émetteur 4 réduit la valeur du seuil d'évitement de congestion à la moitié de la taille de la fenêtre d'émission au moment où la congestion a été détectée, conformément au protocole TCP. On notera ici que le délai de reprise, fixé approximativement au délai de retransmission, correspond au délai de boucle maximum que l'émetteur 4 peut tolérer.

Après le retour à un état stable de la transmission, l'émetteur 4 lance une nouvelle opération d'estimation.

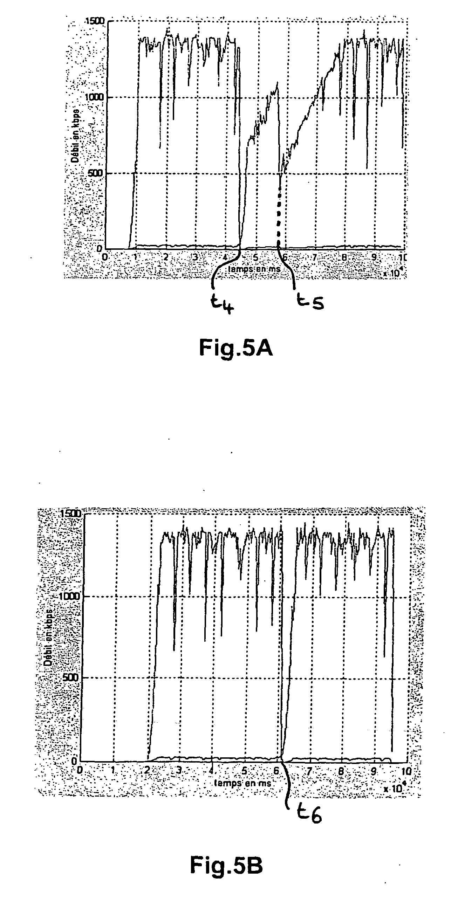

Sur la figure 5A, on a représenté un exemple d'évolution du débit d'émission lorsque deux congestions successives se produisent, le seuil *ssthresh* étant ajusté conformément au protocole TCP standard. La première congestion, à l'instant t4 ≈45 s, est détectée par expiration du délai de retransmission. La taille de la fenêtre est alors brutalement réduite à un paquet et le seuil d'évitement de congestion *ssthresh* est réduit à la moitié de la taille de la fenêtre au moment où la congestion a été détectée. La seconde congestion, à l'instant t5 ≈58 s, est détectée par la réception d'accusés de réception dupliqués ou d'un accusé de réception sélectif signalant la perte de paquets. La taille de la fenêtre d'émission et le seuil d'évitement de congestion sont alors tous deux réduits à la moitié de la taille de la fenêtre de congestion au moment où la congestion a été détectée.

Sur la figure 5B, on a représenté un exemple d'évolution du débit d'émission lorsqu'une congestion se produit à l'instant t6 ≈61ms, le seuil *ssthresh* étant ajusté conformément à la méthode de l'invention. La congestion est ici détectée par expiration du délai de retransmission et la taille de la fenêtre est donc réduite à un seul paquet de données.

En comparant les deux figures 5A et 5B, on peut constater que la reprise du débit précédant la congestion est beaucoup plus rapide sur la figure 5B. La méthode d'ajustement du seuil d'évitement de congestion selon l'invention permet à l'émetteur, après détection d'une congestion, de reprendre un débit d'émission optimal plus rapidement qu'avec la méthode telle que prévue par le protocole TCP standard, sans effectuer de calculs importants.

Dans la description qui précède, l'ajustement du seuil d'évitement de congestion est réalisé par le serveur 4 afin d'optimiser le débit de données dans le sens descendant (du serveur 4 vers le terminal client 2). On pourrait envisager d'ajuster le seuil d'évitement de congestion dans le terminal client 2, afin d'optimiser le débit de données dans le sens montant (du terminal client 2 vers le serveur 4), ou encore, dans le cas d'une transmission de données entre deux terminaux, dans chaque terminal émetteur.

Le test de stabilité pourrait consister:

- à calculer le rapport du nombre d'accusés de réception par rapport au nombre de paquets émis sur une période de durée égale au délai de boucle, la transmission étant stable si ledit délai est compris entre ½ et 1, ou

- à calculer le nombre de paquets perdus, la transmission étant stable s'il s'agit de pertes isolées de un à trois paquets environ.

Au lieu de n'effectuer qu'un seul test de stabilité, on pourrait en effectuer plusieurs pour déterminer si la transmission est stable.

Dans la description qui précède, en cas de détection d'une congestion et après un retour à l'état stable de la transmission, le seuil d'évitement de congestion est ajusté à la dernière valeur de seuil calculée avant la congestion, quelle que soit l'ancienneté de cette valeur de seuil. Dans un mode de réalisation amélioré, on attribue une durée de validité à chaque valeur de seuil calculée et mémorisée dans la mémoire 420. Si, à la suite d'une congestion et après retour à l'état stable de la transmission, la dernière valeur de seuil calculée n'est plus valide, le seuil d'évitement de congestion est ajusté de manière conforme au protocole TCP standard. On limite ainsi la durée pendant laquelle la dernière valeur de seuil calculée peut être utilisée. Cette durée de validité peut être fixe pour un réseau donné ou bien dynamique. Dans le premier cas, et à titre d'exemple illustratif, la durée de validité du seuil peut être de l'ordre de 3 à 6 secondes pour un réseau satellite et de l'ordre de 15 à 20 secondes pour un réseau GPRS. Dans le second cas, la durée de validité du seuil pourrait être égale à 4*RTO, où RTO représente le délai de retransmission de l'émetteur. Cela permet à l'émetteur de faire deux tentatives de reprise de débit avant de revenir à l'ajustement standard.

L'invention s'applique non seulement aux réseaux satellites mais également à tout autre type de réseau, et de préférence aux réseaux à long délai de boucle (de plusieurs centaines de millisecondes) et à large bande passante, par exemple les réseaux LFN (Long Fat Network).

**Revendications**

1. Procédé pour, lors d'une transmission de données entre un émetteur (4) et un récepteur (2) à travers un réseau (5), adapter un seuil d'évitement de congestion en fonction de la charge du réseau (5), dans lequel l'émetteur (4) mesure un délai de boucle minimum $RTT_{min}$, le délai de boucle RTT représentant la durée entre l'envoi d'un paquet de données et la réception d'un accusé de réception correspondant, estime le débit de réception $E_{débit\ réc.}$ et calcule une nouvelle valeur du seuil d'évitement de congestion *"ssthresh"* à l'aide de la formule *ssthreh* = $RTT_{min}.E_{débit\ réc.}$, **caractérisé par le fait que**, durant une opération d'estimation du débit de réception de durée T,

   • l'émetteur (4) mesure la quantité Q de données préalablement émises par lui et acquittées durant la durée T et calcule une estimation du débit de réception à l'aide de la formule

   $$E_{Débit\ réc.} = \frac{Q}{T}\,,$$ la durée T de l'opération d'estimation du débit de réception est égale à:

   - $4*RTT_{min}$ si l'émetteur (4) reçoit un accusé de réception entre l'instant ($t_0 + 4*RTT_{min}$ - d) et l'instant ($t_0 + 4*RTT_{min}$ + d),
   - $8*RTT_{min}$ si l'émetteur (4) reçoit un accusé de réception entre l'instant ($t_0 + 8*RTT_{min}$ - d) et l'instant ($t_0 + 8*RTT_{min}$ + d),

   d représentant un délai de marge dont la valeur dépend du réseau (5),
   • si la durée de l'opération d'estimation dépasse $8*RTT_{min}$+d, du fait que l'émetteur (4) n'a reçu aucun accusé de réception durant ladite opération d'estimation, celle-ci est interrompue.

2. Procédé selon la revendication 1, dans lequel, si aucune congestion n'est détectée durant l'opération d'estimation, une nouvelle opération d'estimation est lancée à la suite de celle-ci.

3. Procédé selon l'une des revendications 1 et 2, dans lequel, si une congestion est détectée lors d'une opération d'estimation, celle-ci est interrompue et une nouvelle opération d'estimation est lancée après un retour à l'état stable de la transmission.

4. Procédé selon la revendication 3, dans lequel, pour vérifier que la transmission est redevenue stable,
l'émetteur (4) calcule la valeur courante du délai de boucle et la compare à la valeur moyenne du délai de boucle observé durant la dernière opération d'estimation, la transmission étant stable si ces deux valeurs sont identiques.

5. Procédé selon l'une des revendications 3 et 4, dans lequel pour vérifier que la transmission est redevenue stable, l'émetteur (4) calcule le rapport du nombre d'accusés de réception reçus par rapport au nombre de paquets émis, sur une période de durée égale au délai de boucle, la transmission étant stable si ledit rapport est compris entre ½ et 1.

6. Procédé selon l'une des revendications 1 à 5, dans lequel, si une congestion est détectée lors d'une opération d'estimation, le seuil d'évitement de congestion est ajusté à la dernière valeur de seuil calculée avant la congestion.

7. Procédé selon la revendication 6, dans lequel si la durée entre la congestion et le retour à un état stable de la transmission excède une durée égale au délai de retransmission RTO de l'émetteur, le seuil d'évitement de congestion est ajusté de manière conforme au protocole TCP standard.

8. Procédé selon l'une des revendications 6 et 7, dans lequel on limite la durée de validité de la dernière valeur de seuil calculée et, si, après une congestion et un retour à l'état stable de la transmission, la dernière valeur de seuil calculée n'est plus valide, le seuil d'évitement de congestion est ajusté de manière conforme au protocole TCP standard.

9. Dispositif d'émission pour la mise en oeuvre du procédé selon l'une des revendications 1 à 8, agencé pour, lors d'une transmission de données vers un récepteur (2) à travers un réseau, adapter un seuil d'évitement de congestion en fonction de la charge dudit réseau, dispositif comprenant

   - des moyens (401) pour mesurer un délai de boucle minimum $RTT_{min}$, le délai de boucle RTT représentant la durée entre l'envoi d'un paquet de données et la réception d'un accusé de réception correspondant, et
   - des moyens (42) d'adaptation du seuil d'évitement de congestion à la charge du réseau, agencés pour estimer le débit de réception $E_{Débit\ réc.}$ et calculer une nouvelle valeur du seuil de congestion à l'aide de la formule *ssthreh* = $RTT_{min}.E_{Débit\ réc.}$, dispositif **caractérisé par le fait que** les moyens (42) d'adaptation du seuil d'évitement de congestion à la charge du réseau sont agencés pour, durant une opération d'estimation du débit de réception de durée T,

• mesurer la quantité Q de données acquittées durant la durée T et pour estimer le débit de réception à l'aide de la formule

$$E_{Débit\ réc.} = \frac{Q}{T}\,,$$ la durée T de l'opération d'estimation du débit de réception est égale à:

- 4*RTT$_{min}$ si l'émetteur (4) reçoit un accusé de réception entre l'instant ($t_0$ + 4*RTT$_{min}$ - d) et l'instant ($t_0$ + 4*RTT$_{min}$ + d),
- 8*RTT$_{min}$ si l'émetteur (4) reçoit un accusé de réception entre l'instant ($t_0$ + 8*RTT$_{min}$ - d) et l'instant ($t_0$ + 8*RTT$_{min}$ + d),

d représentant un délai de marge dont la valeur dépend du réseau (5),
• interrompre l'opération d'estimation, si la durée T de celle-ci dépasse 8*RTT$_{min}$+d, du fait que l'émetteur (4) n'a reçu aucun accusé de réception durant ladite opération d'estimation.

**10.** Dispositif selon la revendication 9, dans lequel les moyens (42) d'adaptation du seuil adapté sont agencés pour lancer une nouvelle opération d'estimation à la fin de l'opération d'estimation précédente, si aucune congestion n'est détectée.

**11.** Dispositif selon l'une des revendications 9 et 10, dans lequel les moyens (42) d'adaptation du seuil sont agencés pour interrompre une opération d'estimation en cas de congestion et lancer une nouvelle opération d'estimation après un retour à l'état stable de la transmission, et il est prévu des moyens de test (43) agencés pour effectuer un test de stabilité afin de déterminer si la transmission est stable.

**Claims**

**1.** Method, in a data transmission between a transmitter (4) and a receiver (2) across a network (5), for adapting a congestion avoidance threshold according to the load on the network (5), in which the transmitter (4) measures a minimum round-trip time RTT$_{min}$, the round-trip time RTT representing the time between the sending of a data packet and the receipt of a corresponding acknowledgement, estimates the reception rate E$_{rec.rate}$ and calculates a new congestion avoidance threshold value "ssthresh" using the formula ssthresh = RTT$_{min}$.E$_{rec.rate}$, **characterized in that**, during an operation for estimating the reception rate of duration T,

• the transmitter (4) measures the quantity Q of data previously transmitted by it and acknowledged during the duration T and calculates an estimation of the reception rate using the formula $E_{rec.rate} = \frac{Q}{T}\,,$ the duration T of the reception rate estimation operation being equal to:

- 4*RTT$_{min}$ if the transmitter (4) receives an acknowledgement between the time ($t_0$+4*RTT$_{min}$-d) and the time ($t_0$+4*RTT$_{min}$+d),
- 8*RTT$_{min}$ if the transmitter (4) receives an acknowledgement between the time ($t_0$+8*RTT$_{min}$-d) and the time ($t_0$+8*RTT$_{min}$+d),

d representing a margin delay, the value of which depends on the network (5),
• if the duration of the estimation operation exceeds 8*RTT$_{min}$+d, because the transmitter (4) has received no acknowledgement during said estimation operation, the latter is stopped.

**2.** Method according to Claim 1, in which, if no congestion is detected during the estimation operation, a new estimation operation is started after the latter.

**3.** Method according to one of Claims 1 and 2, in which, if a congestion is detected in an estimation operation, the latter is stopped and a new estimation operation is started after a return to the stable transmission state.

**4.** Method according to Claim 3, in which, to check that the transmission has become stable again, the transmitter (4) calculates the current round-trip time value and compares it to the average round-trip time value observed during the latest estimation operation, the transmission being stable if these two values are identical.

**5.** Method according to one of Claims 3 and 4, in which, to check that the transmission has become stable again, the transmitter (4) calculates the ratio of the number of acknowledgements received to the number of packets transmitted, over a period of duration equal to the round-trip time, the transmission being stable if said ratio is between ½ and 1.

**6.** Method according to one of Claims 1 to 5, in which, if a congestion is detected in an estimation operation, the congestion avoidance threshold is adjusted to the last threshold value calculated before the congestion.

**7.** Method according to Claim 6, in which, if the duration between the congestion and the return to a stable transmission state exceeds a duration equal to the retransmission delay RTO of the transmitter, the congestion avoidance threshold is adjusted so as to conform to the standard TCP protocol.

**8.** Method according to one of Claims 6 and 7, in which the validity duration of the last calculated threshold is limited and, if, after a congestion and a return to the stable transmission state, the last calculated threshold value is no longer valid, the congestion avoidance threshold is adjusted so as to conform to the standard TCP protocol.

**9.** Transmission device for implementing the method according to one of Claims 1 to 8, adapted, in a data transmission to a receiver (2) across a network, to adapt a congestion avoidance threshold according to the load on said network, the device comprising:

- means (401) for measuring a minimum round-trip time $RTT_{min}$, the round-trip time RTT representing the duration between the sending of a data packet and the receipt of a corresponding acknowledgement, and
- means (42) of adapting the congestion avoidance threshold to the load on the network, adapted to estimate the reception rate $E_{rec.rate}$ and calculate a new congestion threshold value using the formula ssthresh=$RTT_{min}$· $E_{rec.rate}$,

device **characterized in that** the means (42) of adapting the congestion avoidance threshold to the load on the network are adapted to, during an operation to estimate the reception rate of duration T,

• to measure the quantity Q of data acknowledged during the duration T and to estimate the reception rate using the formula $E_{rec.rate} = \dfrac{Q}{T}$, the duration T of the reception rate estimation operation being equal to:

- 4*$RTT_{min}$ if the transmitter (4) receives an acknowledgement between the time $(t_0+4*RTT_{min}-d)$ and the time $(t_0+4*RTT_{min}+d)$,
- 8*$RTT_{min}$ if the transmitter (4) receives an acknowledgement between the time $(t_0+8*RTT_{min}-d)$ and the time $(t_0+8*RTT_{min}+d)$,

d representing a margin delay, the value of which depends on the network (5),
• to stop the estimation operation, if the duration T of the latter exceeds 8*$RTT_{min}$+d, because the transmitter (4) has received no acknowledgement during said estimation operation.

**10.** Device according to Claim 9, in which the means (42) of adapting the adapted threshold are adapted to start a new estimation operation at the end of the preceding estimation operation if no congestion is detected.

**11.** Device according to one of Claims 9 and 10, in which the means (42) of adapting the threshold are adapted to stop an estimation operation in case of congestion and start a new estimation operation after a return to the stable transmission state, and test means (43) are provided, adapted to perform a stability test in order to determine if the transmission is stable.

**Patentansprüche**

**1.** Verfahren, um während einer Datenübertragung zwischen einem Sender (4) und einem Empfänger (2) über ein Netz (5) eine Stauvermeidungsschwelle in Abhängigkeit von der Belastung des Netzes (5) anzupassen, bei dem der Sender (4) eine Mindestschleifenverzögerung $RTT_{min}$ misst, wobei die Schleifenverzögerung RTT die Dauer zwischen dem Senden eines Datenpakets und dem Empfang einer entsprechenden Empfangsbestätigung darstellt, den Empfangsdurchsatz $E_{Durchsatz\ Empf}$ schätzt und einen neuen Wert der Stauvermeidungsschwelle "ssthresh" mit Hilfe der Formel ssthresh = $RTT_{min}$·$E_{Durchsatz\ Empf}$ berechnet, **dadurch gekennzeichnet, dass** während einer Schätzoperation des Empfangsdurchsatzes der Dauer T,

• der Sender (4) die Menge Q von Daten misst, die vorher von ihm gesendet und während der Dauer T bestätigt wurden, und eine Schätzung des Empfangsdurchsatzes mit Hilfe der Formel $E_{Durchsatz\ Empf} = \dfrac{Q}{T}$ berechnet, wobei die Dauer T der Schätzoperation des Empfangsdurchsatzes gleich:

- 4*$RTT_{min}$ ist, wenn der Sender (4) eine Empfangsbestätigung zwischen dem Zeitpunkt $(t_0 + 4*RTT_{min} - d)$ und dem Zeitpunkt $(t_0 + 4*RTT_{min} + d)$ empfängt,
- 8*$RTT_{min}$ ist, wenn der Sender (4) eine Empfangsbestätigung zwischen dem Zeitpunkt $(t_0 + 8*RTT_{min} - d)$ und dem Zeitpunkt $(t_0 + 8*RTT_{min} + d)$ empfängt,

wobei d eine Pufferverzögerung darstellt, deren Wert vom Netz (5) abhängt,
• wenn die Dauer der Schätzoperation $8*RTT_{min}$ + d überschreitet, da der Sender (4) während der Schätzoperation keine Empfangsbestätigung empfangen hat, diese unterbrochen wird.

2. Verfahren nach Anspruch 1, bei dem, wenn während der Schätzoperation kein Stau festgestellt wird, eine neue Schätzoperation nach dieser gestartet wird.

3. Verfahren nach einem der Ansprüche 1 und 2, bei dem, wenn während einer Schätzoperation ein Stau festgestellt wird, diese unterbrochen wird, und eine neue Schätzoperation nach einer Rückkehr der Übertragung zum stabilen Zustand gestartet wird.

4. Verfahren nach Anspruch 3, bei dem, um zu überprüfen, ob die Übertragung wieder stabil geworden ist, der Sender (4) den laufenden Wert der Schleifenverzögerung berechnet und ihn mit dem Mittelwert der Schleifenverzögerung vergleicht, die während der letzten Schätzoperation beobachtet wurde, wobei die Übertragung stabil ist, wenn diese beiden Werte gleich sind.

5. Verfahren nach einem der Ansprüche 3 und 4, bei dem, um zu überprüfen, ob die Übertragung wieder stabil geworden ist, der Sender (4) das Verhältnis zwischen der Anzahl von empfangenen Empfangsbestätigungen und der Anzahl von gesendeten Paketen über eine Periode einer Dauer gleich der Schleifenverzögerung berechnet, wobei die Übertragung stabil ist, wenn das Verhältnis zwischen ½ und 1 liegt.

6. Verfahren nach einem der Ansprüche 1 bis 5, bei dem, wenn während einer Schätzoperation ein Stau festgestellt wird, die Stauvermeidungsschwelle auf den letzten Schwellwert eingestellt wird, der vor dem Stau berechnet wurde.

7. Verfahren nach Anspruch 6, bei dem, wenn die Dauer zwischen dem Stau und der Rückkehr der Übertragung in einen stabilen Zustand eine Dauer gleich der Rückübertragungs-Zeitspanne RTO des Senders überschreitet, die Stauvermeidungsschwelle entsprechend dem Standard-TCP-Protokoll eingestellt wird.

8. Verfahren nach einem der Ansprüche 6 und 7, bei dem die Gültigkeitsdauer des letzten berechneten Schwellwerts begrenzt wird, und wenn nach einem Stau und einer Rückkehr der Übertragung in den stabilen Zustand der letzte berechnete Schwellwert nicht mehr gültig ist, die Stauvermeidungsschwelle gemäß dem Standard-TCP-Protokoll eingestellt wird.

9. Sendevorrichtung zur Anwendung des Verfahrens nach einem der Ansprüche 1 bis 8, die ausgelegt ist, um bei einer Datenübertragung zu einem Empfänger (2) über ein Netz eine Stauvermeidungsschwelle in Abhängigkeit von der Belastung des Netzes einzustellen, wobei die Vorrichtung aufweist

    - Mittel (401), um eine Mindestschleifenverzögerung $RTT_{min}$ zu messen,

wobei die Schleifenverzögerung RTT die Dauer zwischen dem Senden eines Datenpakets und dem Empfang einer entsprechenden Empfangsbestätigung darstellt, und

    - Mittel (42) zur Anpassung der Stauvermeidungsschwelle an die Belastung des Netzes, die ausgelegt sind, um den Empfangsdurchsatz $E_{Durchsatz\ Empf}$ zu schätzen und einen neuen Wert der Stauschwelle mit Hilfe der Formel ssthresh = $RTT_{min} \cdot E_{Durchsatz\ Empf}$ zu berechnen,

wobei die Vorrichtung **dadurch gekennzeichnet ist, dass** die Mittel (42) zur Anpassung der Stauvermeidungsschwelle an die Belastung des Netzes ausgelegt sind, um während einer Schätzoperation des Empfangsdurchsatzes der Dauer T,

• die Menge Q der während der Dauer T bestätigten Daten zu messen und den Empfangsdurchsatz mit Hilfe der Formel

$$E_{Durchsatz\ Empf} = \frac{Q}{T}$$

zu schätzen, wobei die Dauer T der Schätzoperation des Empfangsdurchsatzes gleich:

    - $4*RTT_{min}$ ist, wenn der Sender (4) eine Empfangsbestätigung zwischen dem Zeitpunkt $(t_0 + 4*RTT_{min} - d)$ und dem Zeitpunkt $(t_0 + 4*RTT_{min} + d)$ empfängt,
    - $8*RTT_{min}$ ist, wenn der Sender (4) eine Empfangsbestätigung zwischen dem Zeitpunkt $(t_0 + 8*RTT_{min} - d)$ und dem Zeitpunkt $(t_0 + 8*RTT_{min} + d)$ empfängt,

wobei d eine Pufferverzögerung darstellt, deren Wert vom Netz (5) abhängt,
• die Schätzoperation zu unterbrechen, wenn deren Dauer T $8*RTT_{min}$ + d überschreitet, da der Sender (4) während der Schätzoperation keine Empfangsbestätigung empfangen hat.

10. Vorrichtung nach Anspruch 9, bei der die Mittel (42) zur Anpassung der angepassten Schwelle ausgelegt sind, um am Ende der vorhergehenden Schätzoperation eine neue Schätzoperation zu starten, wenn kein Stau festgestellt wird.

11. Vorrichtung nach einem der Ansprüche 9 und 10, bei der die Mittel (42) zur Schwellenanpassung ausgelegt sind, um eine Schätzoperation im Fall eines Staus zu unterbrechen und eine neue Schätzoperation nach einer Rückkehr der Übertragung in den stabilen Zustand zu starten, und Testmittel (43) vorgesehen sind, die ausgelegt sind, um einen Stabilitätstest durchzuführen, um zu bestimmen, ob die Übertragung stabil ist.

**Fig. 1**

**Fig.2**

**Fig. 3**

**Fig.4**

**Fig.5A**

**Fig.5B**